# FASCICULE DE BREVET EUROPEEN

(11) **EP 2 139 818 B1**
(45) Date de publication et mention de la délivrance du brevet: **10.11.2010**
(21) Numéro de dépôt: 08787954.0
(22) Date de dépôt: 14.04.2008
(51) Int. Cl.: C02F 1/72

(54) **PROCEDE ET DISPOSITIF D'EPURATION D' EFFLUENTS LIQUIDES**
VERFAHREN UND VORRICHTUNG ZUR REINIGUNG VON ABWÄSSERN
METHOD AND DEVICE FOR PURIFYING LIQUID EFFLUENTS

(30) Priorité: 13.04.2007 FR 0702700
(43) Date de publication de la demande: 06.01.2010
(73) Titulaire: Orege, 13854 Aix-en-Provence (FR)
(72) Inventeur: CAPEAU, Patrice, F-13100 Aix-en-Provence (FR); LOPEZ, Michel, F-11110 Coursan (FR); GENDROT, Pascal, F-78350 Jouy en Josas (FR)
(74) Mandataire: Benech, Frédéric
(86) Numéro de dépôt international: PCT/FR2008/000521
(87) Numéro de publication internationale: WO 2008/142293

(56) Documents cités:
- WO-A-01/38235
- US-A- 4 673 443
- US-B1- 6 270 063

## Description

La présente invention concerne un procédé d'épuration d'effluents liquides chargés de substances organiques et/ou minérales, dissoutes ou non, pour les amener en dessous d'une DCO et/ou d'une DBO déterminée par brassage hydraulique violent, oxydation et écrémage.

Elle permet aussi de descendre le taux de COT (carbone total) et de MES (Matière en suspension) à des valeurs inférieures à un seuil déterminé.

L'invention concerne également un dispositif d'épuration de tels effluents.

Elle trouve une application particulièrement importante bien que non exclusive dans le domaine de l'épuration des effluents pétroliers ou des effluents issus de procédés de fabrication de produits issus de l'agriculture, en particulier des effluents à très forte DCO initiale [(> 30.000 mg 02/l, ou mg/l par abus d'écriture comme utilisé par la suite)] dont les chaînes carbonées sont longues et circulaires, c'est-à-dire difficiles à dégrader. Elle permet également et par exemple de réaliser un traitement des pollutions diffuses comprenant des molécules complexes telles que celles des pesticides complexes, ou encore des mélanges d'hydrocarbure et d'eau de mer avec une efficacité inégalée jusqu'alors.

La DCO ou Demande Chimique en Oxygène, est la consommation en oxygène par les oxydants chimiques forts, nécessaire à l'oxydation des substances organiques (et minérales) de l'eau. Elle permet d'évaluer la charge polluante des eaux usées et mesure la totalité des substances oxydables, ce qui inclut celles qui sont biodégradables.

La quantité de matières biodégradables par oxydation biochimique (oxydation par des bactéries aérobies qui tirent leur énergie de réaction d'oxydoréduction) contenues dans l'eau à analyser est, quant à elle, définie par le paramètre DBO (Demande Biologique en Oxygène).

On sait que les effluents liquides, souvent qualifiés d'eaux usées et qui en constituent le principal exemple, sont de nature à contaminer les milieux dans lesquels ils sont rejetés.

Or une trop forte DCO ou DBO des effluents est nocive.

En effet, les matières non biodégradables qu'elles contiennent sont amenées à être lentement oxydées par le dioxygène dissous dans l'eau ou par celui de l'air en surface de l'effluent.

L'Oxygène gazeux dissous étant indispensable à la vie, une demande trop importante dans une eau de rivière, ou à la surface d'un plan d'eau, va être nuisible à la vie animale et végétale, d'où la nécessité du traitement.

On connaît déjà de nombreux procédés de traitement des eaux usées et/ou d'autres effluents issus de procédés chimiques en vue de leur rejet dans l'environnement.

Ces traitements peuvent être réalisés de manière collective dans une station d'épuration ou de manière individuelle.

Ainsi, il existe des stations d'épuration permettant d'obtenir des DCO et/ou DBO acceptables autorisant le rejet dans l'environnement, notamment par traitement oxydant.

De telles installations présentent cependant des inconvénients.

Elles nécessitent en effet des sites de dimensions importantes qui doivent en général être situés à distance des zones habitées, compte tenu d'émissions d'odeurs ou d'aérosols gênants, voire toxiques. Elles ont de plus des coûts de fonctionnement importants et une efficacité limitée, de moins en moins acceptable compte tenu de l'accroissement des exigences réglementaires en matière de rejet.

En particulier, des taux inférieurs à 1.000 mg/l de DCO, voire nettement inférieurs à cette valeur, sont aujourd'hui de plus en plus exigés, ce qui se révèle impossible à obtenir dans le cas de certains effluents, par exemple, issus d'usines de production des huiles.

Il existe également des dispositifs et procédés plus complexes mais qui ne permettent pas forcément d'obtenir les performances recherchées, nécessitant systématiquement des additifs coûteux, eux-mêmes générateurs de déchets.

On connaît par exemple (WO 01/38235) un procédé d'épuration d'effluents aqueux par oxydation catalytique utilisant un réacteur triphasique traversé en continu par les effluents dans lequel on maintient en suspension le catalyseur solide en le recyclant.

Le réacteur comporte deux compartiments à savoir un premier compartiment dans lequel on maintient le réactif en suspension et on entraîne l'effluent en circulation en y faisant buller un gaz vecteur et un second compartiment où l'oxydation des effluents se fait par injection d'ozone.

Un tel réacteur présente, en cas d'augmentation du débit du bullage, des engorgements qui limitent de ce fait un tel débit. Il nécessite de plus une évacuation organisée du gaz moteur qui interfère avec un bon contact entre catalyseur et effluent.

Il est donc aujourd'hui fréquent de ne pas pouvoir atteindre les taux exigés pour la remise dans l'environnement, ce qui entraîne la nécessité de diluer l'effluent par de l'eau pure avant son rejet. Une telle dilution, outre qu'elle est généralement illégale, n'est pas satisfaisante, nécessite des installations de pompage et de recyclage coûteuses et ne changent rien quantitativement au volume d'effluents gênants rejetés.

Par ailleurs dans le cas d'effluents particuliers nouvellement apparus, les procédés classiques se révèlent inefficaces.

Il existe donc depuis longtemps un besoin non comblé d'un procédé efficace, général, compact et non polluant d'épuration d'effluents liquides.

La présente invention vise à fournir un tel procédé, et un dispositif de traitement des effluents correspondant, répondant mieux que ceux antérieurement connus aux exigences de la pratique, notamment en ce qu'elle permet un traitement compact, nettement moins coûteux et beaucoup plus efficace que celui obtenu avec les stations de traitement de l'art antérieur.

Une grande souplesse de fonctionnement du dispositif permet par ailleurs de l'adapter et de le régler en fonction du type d'effluent à traiter, qui n'est jamais le même d'une installation à l'autre, ce qui est un avantage important de l'invention.

Dans ce but, l'invention propose essentiellement un procédé d'épuration d'effluents liquides chargés de substances organiques et/ou minérales, dissoutes ou non, pour les amener en dessous d'un seuil de DCO déterminé, dans lequel on sépare l'eau des substances en effectuant dans une même enceinte verticale comportant au moins deux compartiments, un bullage vertical dans les effluents introduits à un débit d, et simultanément dans la même enceinte une oxydation chimique hydraulique ou gazeuse desdits effluents, **caractérisé en ce que** l'enceinte étant à surface libre et comprenant au moins trois compartiments communiquant entre eux pour permettre une circulation entre compartiments successivement du haut vers le bas et du bas vers le haut et ainsi de suite, on introduit les effluents d'un coté et on les soutire d'un autre côté en partie haute de l'enceinte audit débit d, on fait circuler, par le biais d'un circuit hydraulique externe, les effluents au travers des compartiments entre leur partie basse et un niveau moyen à un débit global D au moins trois fois supérieur au débit d, et on évacue en continu la phase surnageante, le débit d'oxydation chimique ainsi que le débit et la taille des bulles étant agencés pour obtenir progressivement une séparation de phases solide/liquide et/ou liquide/liquide en surface de l'enceinte permettant l'obtention d'une DCO en dessous du seuil déterminé.

La circulation par le biais d'un circuit hydraulique externe permet de réinjecter la où on le souhaite, le débit global D, ce qui va autoriser une grande souplesse de fonctionnement comme cela est encore plus précisément décrit ci-après.

L'évacuation en continu de la phase surnageante libère quant-à-elle la surface libre du réacteur qui peut ainsi jouer un rôle de capteur des têtes hydrophobes des structures à extraire.

A noter qu'une séparation liquide/liquide est obtenue lors de la présence de deux ou plusieurs liquides non miscibles, et notamment en cas de présence de colloïdes.

Un tel procédé va également permettre, s'il y a lieu, de descendre le DBO et/ou le taux de MES en dessous respectivement d'un deuxième et d'un troisième seuil déterminé.

Il permet de plus de rechercher un rapport DBO/DCO au dessus d'une valeur particulière, ce qui est intéressant pour faciliter ensuite la décontamination biologique.

Par niveau moyen, il faut entendre un niveau intermédiaire entre la partie basse du compartiment et la surface libre des effluents dans l'enceinte, niveau qui doit à tout le moins être situé en dessous des piquages d'entrée et de sortie des effluents au débit d, par exemple un peu en dessous (quelques centimètres), ou plus bas, par exemple un peu au dessus du milieu des parois des compartiments, ou entre les deux, de façon à ménager une zone plus calme au dessus dudit niveau moyen entre ce dernier et la surface libre, comme on le verra ci-après.

Le débit D est, quant à lui et par exemple dans des modes avantageux, supérieur à quatre fois; cinq fois ou encore à huit fois le débit d.

Avec un tel procédé, on met ainsi en oeuvre des écoulements verticaux organisés au détriment d'écoulements horizontaux, qui sont pratiquement bannis, de sorte qu'on maximise les rencontres entre les éléments interagissants. L'eau à épurer est elle-même utilisée comme réactif grâce au pompage dans le compartiment final, situé en aval, et réinjections dans les compartiments amonts, du produit lui-même épuré et porteur d'une fonction oxydante.

Dans des modes de réalisation avantageux, on a de plus recours à l'une et/ou à l'autre des dispositions suivantes :
- l'oxydant chimique est, seul ou en combinaison, choisi parmi les oxydants H2O2, 03, O° ou OH° ;
- l'oxydant chimique est injecté dans un circuit en bypass avec un des compartiments
- le procédé comporte la mise en oeuvre d'une circulation dans quatre compartiments;
- on évacue en continu la phase surnageante par raclage en partie supérieure des boues de flottage dans un compartiment déversoir .

Un tel système gravitaire présente l'avantage de limiter les risques de colmatage ;
- l'oxydation chimique est essentiellement réalisée dans le dernier compartiment de circulation des effluents de l'enceinte ;
- l'oxydation chimique comporte un bullage de microbulles obtenu par électrolyse, dit nanobullage ;
- la dimension des bulles du nanobullage au moment de leur création est comprise entre 0,01 mm et 0,1 mm, par exemple de l'ordre de 0,05 mm ;
- le débit du nanobullage est compris entre 2 d et 15 d ;
- le nanobullage est obtenu par circulation d'une partie des effluents recyclés sur des électrodes plates parallèles, avantageusement des électrodes qui produisent des substances radicalaires à la surface desdites électrodes et plus particulièrement des électrodes dopées au diamant;
- le débit D de circulation des effluents au travers des compartiments est supérieur à dix fois le débit d ;
- le bullage vertical est effectué avec de l'air, la dimension moyenne de bulles à leur émission étant comprise entre 0,5 mm et 5 mm ;
- le bullage vertical est obtenu par cavitation dans le circuit de circulation des effluents ;
- le débit D est réinjecté de façon déterminée et réglable en partie basse d'un ou plusieurs des compartiments
- le régime hydraulique vertical dans l'enceinte est agencé pour que la partie basse soit en régime fortement turbulent (Re >>3000 m² s-1) et la partie haute proche de la surface libre soit en régime laminaire (Re < 2000 m² s-1) ;
- on réalise un brassage complémentaire dans un ou plusieurs des compartiments par recirculation à fort débit via un circuit bypass attaché au compartiment concerné.

Par fort débit il faut entendre un débit supérieur à 3 d, par exemple 4 à 10 fois supérieur ;
- on réalise de plus une oxydation complémentaire dans le circuit bypass.

Dans ce cas avantageusement le système d'oxydation utilisé est un système d'électrolyse qui produit des substances oxydantes radicalaires à la surface des électrodes. De façon étonnante l'efficacité de l'opération est encore améliorée lorsque le débit de recirculation est au moins trois fois supérieur au débit théorique de traversée du système d'électrolyse ;
- le procédé comporte de plus une filtration biologique. Grâce au cassage ou découpage de la longueur des molécules obtenues avec les étapes précédentes du procédé, le rapport DBO5/DCO est devenu très favorable et un tel traitement biologique supplémentaire permet un résultat encore plus exceptionnel.

L'invention propose également un dispositif mettant en oeuvre le procédé tel que décrit ci dessus.

Elle propose aussi un dispositif épurateur d'effluents liquides chargés de substances organiques et/ou minérales, dissoutes ou non, pour les amener en dessous d'un seuil de DCO déterminé, comprenant une enceinte verticale comportant au moins deux compartiments verticaux adjacents communiquant entre eux, des moyens d'alimentation en air de bullage vertical en partie basse des compartiments, des moyens d'introduction des effluents d'un coté et de soutirage d'un autre coté en partie haute de l'enceinte à un débit d, et des moyens d'alimentation en fluide d'oxydation chimique hydraulique ou gazeux desdits effluents, **caractérisé en ce que** l'enceinte comporte au moins trois compartiments communiquant entre eux par une ou plusieurs ouvertures ménagées en paroi d'une part à leur partie basse et d'autre part à un niveau moyen, pour permettre une circulation entre compartiments successivement du haut vers le bas et du bas vers le haut et ainsi de suite, des moyens de mise en circulation par circuit hydraulique externe des effluents entre les ouvertures en partie basse des parois et celles à un niveau moyen à un débit global D au moins trois fois supérieur au débit d, des moyens d'évacuation en continu de la phase surnageante , et des moyens de réglage permettant d'ajuster le débit d'oxydation chimique ainsi que le débit et la taille des bulles du bullage vertical pour obtenir une séparation des phases solide/liquide et/ou liquide/liquide des effluents en surface de l'enceinte permettant l'obtention d'un DCO au dessous du seuil déterminé.

Avantageusement, l'enceinte comporte cinq compartiments dont quatre de circulation des effluents et un d'évacuation des boues de flottage par gravité.

Egalement avantageusement, les compartiments ont une hauteur utile H comprise entre 2 m et 6 m, par exemple de l'ordre de 4 m.

Dans un mode de réalisation avantageux, le rapport entre la hauteur utile H et la section S de chaque compartiment est compris entre 4 et 10.

Dans un autre mode de réalisation avantageux, l'oxydation chimique est effectuée par production de radicaux libres hydroxyles OH° à partir de la molécule d'eau H20, cette production pouvant s'effectuer par électrolyse.

Avantageusement, les bulles d'air pour bullage vertical sont réalisées dans le circuit hydraulique externe de mise en circulation des effluents par des moyens de cavitation.

Egalement avantageusement, au moins un compartiment comprend un circuit bypass qui lui est attaché de recirculation à fort débit, dans lequel on réalise ou non une oxydation complémentaire, avantageusement par électrolyse.

Dans un autre mode de réalisation avantageux, le dispositif comporte de plus des moyens de traitement par filtration biologique.

L'invention sera mieux comprise à la lecture de la description qui suit de modes de réalisation donnés ci-après à titre d'exemples non limitatifs. La description se réfère aux dessins qui l'accompagnent dans lesquels :
La figure 1 est une vue en perspective schématique d'un mode de réalisation du dispositif selon l'invention.
La figure 2 est un schéma développé montrant les écoulements internes et externes du dispositif de la figure 1.
La figure 3 est une vue de dessus schématique de l'enceinte de la figure 1 faisant apparaître les sens de circulation des flux.
La figure 4 est une vue en perspective de l'enceinte de la figure 1 illustrant ici encore les écoulements.
La figure 5 donne schématiquement en perspective éclatée un mode de réalisation de dispositif d'oxydation par électrolyse.
La figure 6 est un schéma de fonctionnement d'un dispositif selon un autre mode de réalisation de l'invention à plusieurs compartiments adjacents.
Les figures 7 à 10 montrent des courbes d'épuration faisant apparaître la DCO obtenue, en fonction du temps de traitement, dans différents exemples, avec le procédé selon l'invention.
La figure 11 est un schéma développé de fonctionnement d'un dispositif selon un autre mode de réalisation de l'invention.
Les figures 12 à 15 sont des diagrammes de résultats obtenus avec le dispositif de la figure 11, avec un même type d'effluents mais de composition variable et en fonction de divers DCO de départ.

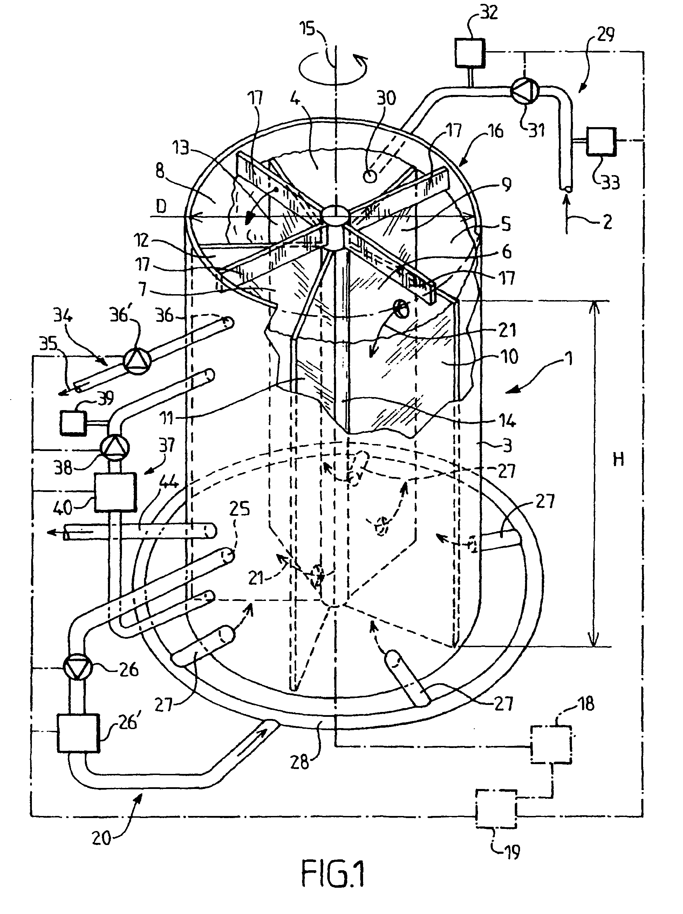

Les figures 1, 2 et 4 montrent un dispositif 1 d'épuration d'effluents liquides 2 à un débit d, par exemple de 2 m3/h comprenant une enceinte cylindrique verticale 3 en acier inox, de hauteur utile H, par exemple de 5 m et de diamètre D, par exemple de 2 m.

L'enceinte comporte cinq compartiments verticaux dont quatre de circulation des effluents sensiblement identiques 4, 5, 6 et 7 d'une part, et un compartiment d'évacuation des boues 8 d'autre part, dont les sections forment des portions de disque sensiblement triangulaires de surfaces S égales. D'autres sections, par exemple circulaires, suffisamment élargies pour éviter tout engorgement du fait du bullage, permettent une efficacité similaire.

Les compartiments sont respectivement séparés entre eux par des parois internes 9, 10, 11, 12 et 13 disposées radialement et régulièrement autour d'un noyau central cylindrique 14 d'axe 15 muni en partie haute, au-dessus (1 à 2 mm) du bord supérieur des parois internes, d'un système 16 de raclage à quatre pales 17 identiques en forme de plaques plates rectangulaires disposées radialement et réparties angulairement. Le système 16 est actionné par un moteur rotatif 18 commandé de façon connue en elle-même par un automate 19 programmable de commande de l'ensemble du dispositif.

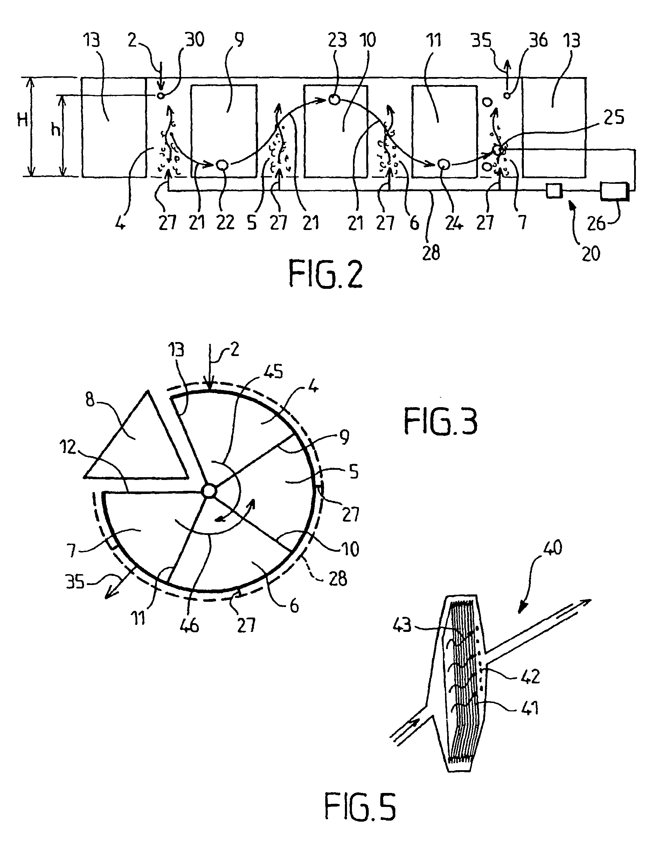

Le dispositif 1 comprend de plus un système 20 de circulation hydraulique externe entre compartiments 4, 5, 6, et 7 (cf. Egalement figures 2, 4 et 11) des effluents liquides à un débit global D = x x d, par exemple avec x = 10, pour permettre après répartition de ce débit total entre les différents compartiments une circulation 21 entre lesdits compartiments successivement du bas vers le haut et du haut vers le bas et ainsi de suite grâce à des ouvertures de diamètre suffisant pour permettre le passage des débits partiels, et/ou plus généralement du débit D, dans le cas où tout le débit D serait renvoyé dans le premier compartiment seul.

Les ouvertures sont ménagées dans les parois, à savoir, dans l'exemple plus particulièrement décrit ici, une ouverture 22 en partie basse de la paroi 9, à une distance k du fond, par exemple à 30 cm, une ouverture 23 ménagée en partie haute de la paroi 10 à une distance K du fond, par exemple à 4 m 50. et une ouverture 24 réalisée en partie basse de la paroi 11, à ladite distance k du fond. Le débit D est ensuite repris par une ouverture intermédiaire 25 située à la distance l du fond, par exemple à 1 m 50, dans le compartiment 7 par la pompe 26 de circulation à gros débit D, pour être injecté en partie inférieure, en dessous des ouvertures les plus basses 22 et 24, par exemple à une distance i du fond de 10 cm, par quatre piquages 27 identiques, affectés à chaque compartiment 4, 5, 6 et 7, lesdits piquages étant reliés entre eux par une canalisation 28 de répartition. Des moyens de régulation, par exemple des électrovannes commandées par l'automate 19, ici non représentés mais connus en eux-mêmes sont prévus pour régler les débits et/ou équilibrer les pertes de charges entre les différents compartiments.

Le système 20 de circulation comprend de plus un dispositif 26' de cavitation permettant d'injecter des bulles d'air de petit diamètre (inférieures au millimètre) dans le débit, qui constitue de ce fait l'alimentation en air de bullage vertical mentionné ci-avant.

Cet air de bullage n'a aucun rôle moteur, et joue même plutôt un rôle de frein quant il est à contre courant, par exemple dans les compartiments 4 et 6.

Le dispositif 1 comprend également des moyens 29 d'introduction des effluents 2 en partie haute du premier compartiment 4 au débit d par un piquage 30 situé à une hauteur h un peu inférieure à H, par exemple située à H - 20 cm sensiblement sur la génératrice du milieu de la paroi externe.

Les moyens 29 comprennent une pompe 31 commandée par l'automate 19, et des circuits 32 et 33 d'ajout de réactifs connus en eux-mêmes, par exemple sous forme liquide, et dépendants du type d'effluents traités pour mieux permettre l'oxydation et/ou le cassage des molécules longues.

Il comprend de l'autre côté, des moyens 34 d'extraction des effluents traités 35 au débit d à la hauteur h en partie haute du dernier compartiment 7 par un piquage 36, comportant une pompe 36'. Le dispositif 1 plus particulièrement décrit ici comprend également un circuit 37 d'alimentation en fluide d'oxydation chimique, hydraulique ou gazeux, des effluents dans le dernier compartiment 7.

Ce circuit comprend une pompe 38 de circulation d'un réactif du bas vers le haut dans le compartiment 7. Il comporte un système d'alimentation en réactif 39 et/ou des moyens 40 en ligne d'oxydation par électrolyse chimique.

Ces moyens 40 (cf. figure 5) sont par exemple formés par une série de plusieurs électrodes plates parallèles 41.

Les ions OH° 42 sont produits à la surface des électrodes sur une épaisseur de quelques dizaines de µ, un écoulement 43 turbulent étant formé sur une surface suffisante, les électrodes étant espacées de quelques millimètres.

Le dispositif 1 comporte enfin le compartiment 8 d'évacuation gravitaire des boues, comprenant une trémie de collecte avec entonnoir de guidage (non représentée). Les boues sont ensuite récupérées par le bas en 44, par exemple par pompage (non représenté), la circulation des effluents se faisant dans le sens 45 (cf. figure 3) et celle du raclage des boues en partie haute dans le sens inverse 46.

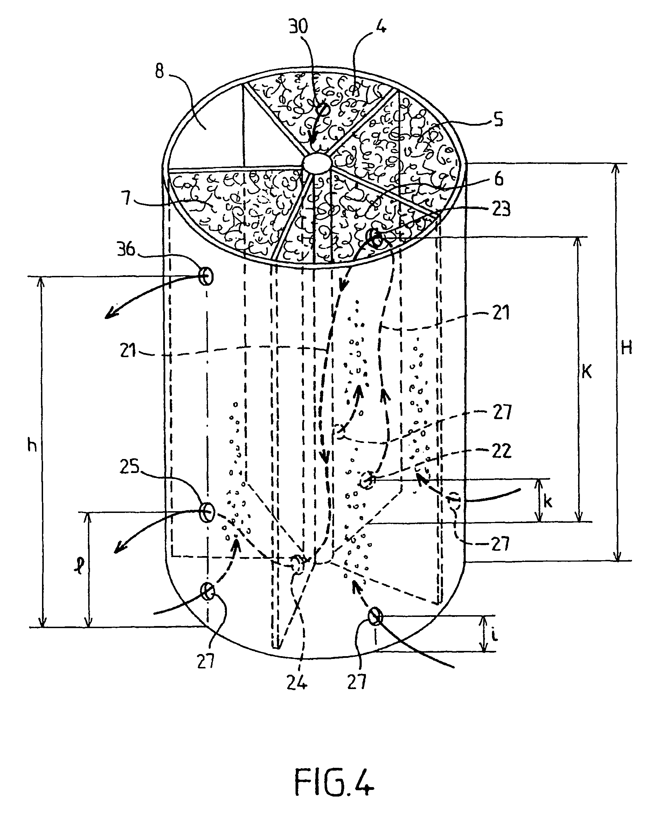

On va maintenant compléter ci-après la description en précisant le fonctionnement du procédé, selon le mode de réalisation plus particulièrement décrit ici, en faisant référence aux figures 1 à 5, et notamment aux figures 2 et 4 où les circulations sont plus précisément représentées.

Les eaux 2 à traiter par le procédé sont des eaux à charge polluante constituée de substances organiques, minérales, dissoutes ou non.

Elles sont récupérées en amont, éventuellement après un premier traitement du type connu en lui même (dégrillage, dessablage, déshuilage etc...), puis transférées vers le dispositif pour y être introduites avec un débit d, par exemple compris entre 1m³/h et 15m³/h.

Des réactifs sont par ailleurs introduits directement ou indirectement dans les quatre compartiments 4, 5, 6 et 7, sous forme liquide ou gazeuse en 32, 33 et 37.

Pendant leur circulation au travers des compartiments 4, 5, 6 et 7 les eaux vont bénéficier de plusieurs actions simultanées visant à la séparation entre les éléments polluants et l'eau elle-même, ainsi qu'au traitement de ceux-ci par oxydation.

Il va ainsi être possible de limiter la charge en polluant de l'eau sortie en 36, pour la mettre aux normes de rejet en station d'épuration (le procédé intervient alors comme pré traitement) ou dans le milieu naturel (le procédé intervient alors comme traitement complet).

De même, il permet de réduire la boue produite et de préparer le produit à son traitement final, grâce à une réduction de la taille des molécules, provenant de leur oxydation/découpage au niveau des liaisons C-C et une déstabilisation des amas moléculaires.

Dans le mode de réalisation plus particulièrement décrit chaque compartiment 4, 5, 6 et 7 a un rôle.

Ce rôle vise d'abord à extraire la quantité maximum de matière polluante, en utilisant si besoin est les techniques de coagulation et de floculation de cette matière. Le procédé selon l'invention permet ainsi un apport séquencé, compartiment après compartiment en induisant plusieurs actions d'ordre physique et chimique qui vont pouvoir être optimisées en fonction des effluents.

Ainsi avec certains effluents on va, après quelques tests, s'apercevoir qu'il faut rechercher un effet d'oxydation chimique fort dès le début, puis ensuite le produit étant déjà prétraité, l'attaquer d'une autre manière en le modifiant par réinjection de l'effluent prétraité dans les compartiments suivants dont le contenu est différent, chaque compartiment contenant en effet un effluent différent, la séparation entre compartiment donnant un produit non homogène à l'intérieur du réacteur.

L'oxydation chimique est tout d'abord obtenue par l'oxygène de l'air lui-même, mais également (confère ci-dessus) par l'introduction d'oxydants chimiques, moléculaires ou radicalaires.

Il convient ici de noter que les modes opératoires de ces oxydations sont sensiblement différents.

L'oxygène de l'air qui rappelons le n'est pas là pour avoir un effet moteur, est, pour sa part, introduit par bullage grâce à la cavitation préparée en 29.

Le dispositif, de part sa configuration, permet un temps de contact long entre les bulles et l'eau.

La taille des bulles est en outre significativement petite (c'est-à-dire dans le mode de réalisation plus particulièrement décrit, inférieure à 1 mm de diamètre) de façon à assurer une grande surface de contact. De plus, la formation (production) de bulles étant réalisée sur un circuit hydraulique à fort débit et forte vitesse, elle permet un mélange efficace entre l'air et l'eau.

L'oxydant radicalaire ou moléculaire est, quant à lui, introduit sur le circuit hydraulique 37 à forte vitesse.

On utilise ici un oxydant très puissant de type H2O2 ou 03 ou une combinaison des deux, ou encore de radicaux O° ou OH°.

Si les oxydants sont produits par électrolyse, l'eau traitée étant l'électrolyte, on bénéficie de ce fait d'une forte dispersion au contact des anodes et cathodes.

Le mode opératoire d'introduction des oxydants moléculaires permet, quant à lui, en fonction des effluents traités et de façon facilement optimisable par un homme du métier, un temps de contact aussi long que possible. Gaz ou liquide oxydant bénéficient ainsi d'un mélange avec l'eau traitée par le même principe que l'oxygène de l'air.

Une séparation des phases polluantes et eau est par ailleurs obtenue par l'utilisation du caractère tensio actif des bulles d'air.

Au passage des bulles d'air (flèches ondulées montantes de la figure 2), les amas et molécules sont ainsi captés et montent à la surface des compartiments où l'extraction s'effectue en zone calme.

A la surface des compartiments, à pression atmosphérique, les bulles éclatent, la surface libre de l'eau jouant le rôle de capteur des têtes hydrophobes des structures à extraire.

Le système de raclage régulier, réalisé avec les pales 17, permet quant à lui de libérer la surface afin d'en maintenir le caractère actif. Le raclage est effectué de façon très lente, à une vitesse de quelques tours par minute.

Les produits raclés se retrouvent quant à eux sous forme de mousses pâteuses, et sont récupérés dans le compartiment 8 en forme de goulotte d'évacuation.

A noter que les pôles hydrophobes se trouvent parfois physiquement protégés par les pôles hydrophiles des amas moléculaires. Ces rangements qui assurent une grande solubilisation de ces structures chimiques rendent alors difficiles leur traitement et leur extraction de l'eau et par conséquent sa dépollution.

La cohésion de ces amas moléculaires est en effet assurée par les forces très significatives de type coulomb et Van der Waals.

Le dispositif selon l'invention permet d'intervenir au niveau de ces liaisons :
- par l'introduction et l'optimisation de l'action de structure chimique à forte charge effectuant un travail de déstabilisation de ces structures (bullage, réactif chimique oxydant hydraulique ou gazeux) ;
- par la production de chocs engendrant une forte énergie au niveau des amas moléculaires. Ces fortes énergies sont produites par la transformation de l'énergie cinétique en chocs sur les parois ou sur les amas eux-mêmes dû au fort brassage du fait de la recirculation à fort débit D ≥ 3 à 5 d.

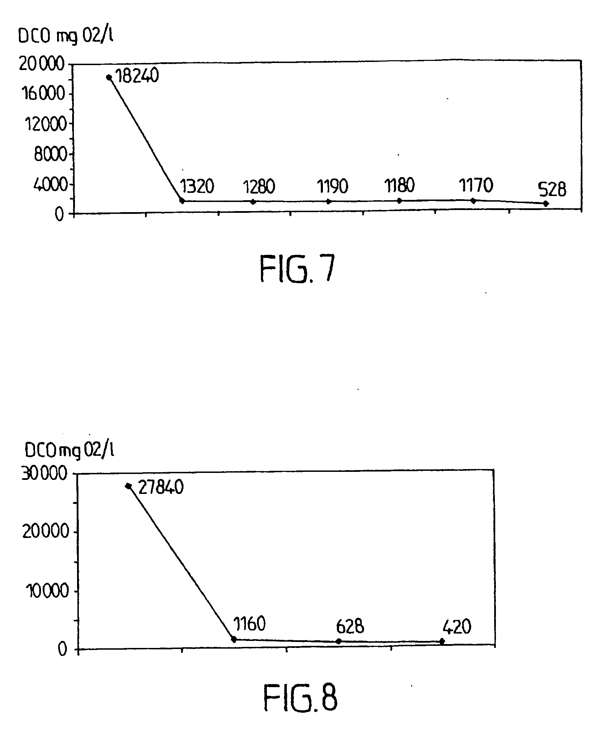

Comme l'ensemble de ces actions sont produites au sein d'un dispositif présentant plusieurs compartiments qui présentent une colonne d'eau suffisante, on obtient alors ,de façon surprenante, les résultats exceptionnels du type de ceux qui seront détaillés ci-après en référence aux tableaux I à V et VII à IX et aux figures 7 à 11 et 13 à 15.

On notera ici que l'existence d'une distance physique entre les parties hautes et basses des compartiments, permet aux régimes hydrauliques de ces deux zones d'être différents.

La partie haute des deux compartiments présente en effet un écoulement laminaire à deux dimensions, tandis que la partie basse est au contraire une zone de forte turbulence hydraulique, à écoulement tridimensionnel et mouvements browniens.

Plus précisément, la partie basse des compartiments est la zone de retour des circuits hydrauliques, et des apports directs de bulles d'air et d'oxydants, et ce à fort débit et forte vitesse, sachant que les compartiments 4, 5, 6 et 7 communiquent par contre entre eux à des niveaux moyens , et en partie basse, par un jeu d'écoulement en chicane. Les zones supérieures bénéficient ainsi du calme nécessaire aux apports physiques et chimiques permettant une bonne épuration.

Le régime d'écoulement du dispositif est encore précisé ci-après en référence à la figure 4. Le premier compartiment 4 (qui bénéficie de l'introduction des eaux brutes) par le haut, voit ces dernières s'écouler vers le bas (au dessus de la zone de rentrée) du circuit hydraulique le plus fort. Le second compartiment 5 s'écoule vers le troisième par le haut, à un niveau inférieur au niveau haut de l'eau.

Le dernier compartiment 6 est celui qui précède la sortie de la ligne complète qui s'effectue au compartiment 7. Encore une fois, cet écoulement en chicane garantit un temps de contact important et une plus grande efficacité de l'extraction par les bulles, grâce à la production de contre courants (ascendant/descendant).

Du premier compartiment 4 au dernier 7, on observe alors de façon spectaculaire que s'établit un gradient négatif de pollution de l'eau.

Dans le mode de réalisation de l'invention plus particulièrement décrit ici, le circuit d'oxydation chimique n'est mis en oeuvre que sur le dernier compartiment 7.

Le procédé selon l'invention permet ainsi soit le traitement complet de l'eau, soit un travail de préparation des eaux avant leur prise en charges par une filière complémentaire par exemple biologique.

Grâce aux circulations ascendantes des bulles et des oxydants, tandis que les écoulements liquides sont, quant à eux, tour à tour ascendant ou descendant, mais verticaux, le flux traverse bien le dispositif tout en lui permettant d'organiser des écoulements exclusivement verticaux.

Selon l'une des particularités du procédé, l'effluent est, comme on l'a vu, lui-même utilisé pour effectuer le travail physique et chimique souhaité.

C'est ainsi l'énergie cinétique engendrée sur un volume de celui-ci qui permet la production de bulles, mais c'est aussi cette énergie qui permet de casser les émulsions du produit lui-même.

Enfin, c'est la capacité du produit à conduire lui-même l'électricité, qui permet d'introduire des réactifs oxydants produits sur la molécule d'eau contenue dans l'effluent comme c'est le cas dans une oxydation par électrolyse.

Une grande économie de matière et d'énergie est ainsi réalisée, ce qui est un des gros avantages de la présente invention.

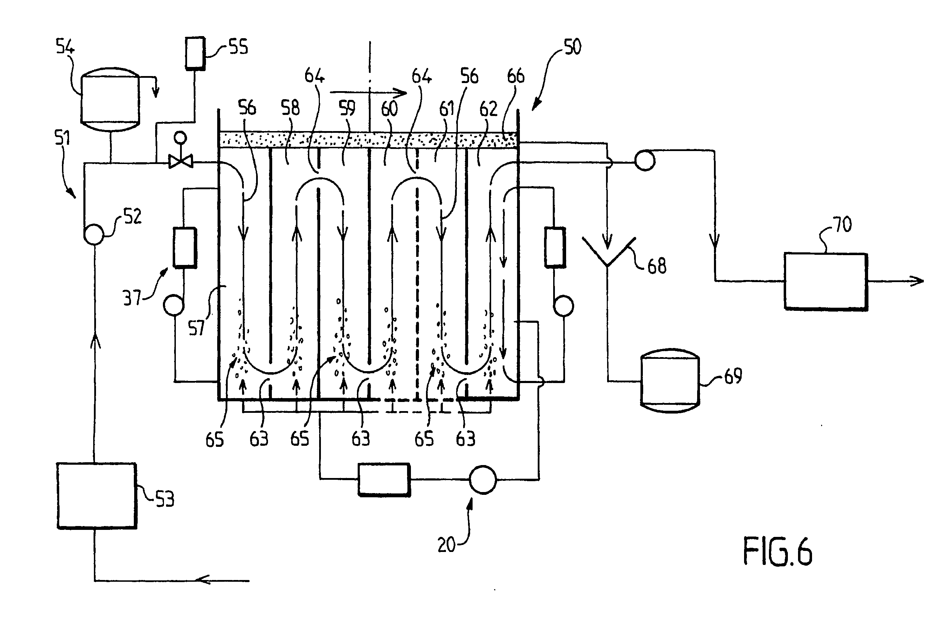

On va maintenant décrire un autre mode de réalisation d'un dispositif selon l'invention en référence à la figure 6.

Par la suite, on utilisera les mêmes numéros de référence pour désigner les mêmes éléments où des éléments similaires que ceux décrits dans les figures précédentes.

La figure 6 montre un dispositif 50 comprenant des moyens d'alimentation 51 en effluents par le biais d'une pompe 52 après prétraitement 53. Les moyens 51 comportent divers dispositifs d'alimentation en réactif 54,55.

Les effluents suivent, quant à eux, un trajet 56 entre les compartiments adjacents 57, 58, 59, 60, 61, 62 (nombre non limitatif) reliés entre eux par des ouvertures alternativement disposées en bas 63 et en haut 64, pour former une chicane.

Dans les premier et dernier compartiments 57 et 62, deux circuits 37 d'oxydation de type identique, sont, de plus, prévus.

La circulation d'effluents à gros débit est reprise par le circuit 20, et réinjectée en partie basse de chaque compartiment, de façon identique, après traitement par cavitation, ce qui va permettre le bullage 65. Les boues 66 sont récupérées en surface du liquide 67 pour être évacuées vers un déversoir 68 et stockées ou traitées en 69.

Les effluents épurés sont, quant à eux, récupérés en partie haute du dernier compartiment 62, pour être stockés ou traités par des moyens en 70.

Différents exemples de traitement d'effluents selon l'invention vont maintenant être donnés pour illustrer les résultats exceptionnels obtenus avec le procédé selon l'invention.

Un premier exemple est donné, en référence à un effluent majoritairement constitué d'amidon. L'amidon est un polysacharide dont la masse moléculaire est comprise entre 100.000 uma et plus de 1.000.000 uma.

Le polysacharide est en sucre par ailleurs constitué d'une chaîne droite de molécules de glucose réunies par une molécule d'oxygène entre le premier carbone d'une première molécule, et le quatrième carbone d'une seconde molécule et ainsi de suite, le lien glucose-glucose étant d'un type particulièrement difficile à casser.

Grâce au procédé selon l'invention, et un dispositif tel que décrit ci-dessus, un taux de MES (Matière En Suspension) inférieur à 10 mg/l et une DCO < 120 mg/l vont pouvoir être obtenus. De même va pouvoir être constaté un rapport DCO/DB05 favorable à la biodégradation de l'effluent. La DB05 est la Demande Biologique en Oxygène sur cinq jours.

Pour ce faire, et selon le mode de réalisation de l'invention, plus particulièrement décrit ci-après, il est tout d'abord effectué un traitement physico chimique avec catalyse, flottation, microbullage dans les quatre compartiments en eau du dispositif, ce qui permet de diminuer le DCO de 80% à 90% entraînant par exemple l'obtention d'une DCO comprise entre 500 et 1.000 mg/l.

Il est de plus et simultanément effectué une hyper oxydation dans le dernier compartiment, qui est partiellement reprise dans les autres, du fait de l'entraînement des produits par le circuit de circulation gros débit en tourne rond.

Cette phase se révèle seule capable de détruire les molécules complexes. Elle permet de casser le talon de DCO et de le descendre sous 120mg/l de DCO.

Elle augmente de plus le rapport DB05/DCO et montre ainsi une grande biodégradabilité du substrat pour un découpage des chaînes moléculaires permettant d'obtenir in fine la plus petite structure organique possible, c'est-à-dire du CO2.

Selon un mode de réalisation particulier de l'invention, l'hyper oxydation est réalisée à partir d'ions OH°, obtenu par catalyse.

Ces derniers sont par exemple produits à la surface d'électrodes plates empilées en parallèle, insérée dans un module sur une épaisseur de quelques dizaines de mm par exemple des électrodes fabriquées par la société allemande CONDIAS. Un transfert de masse est provoqué au contact des électrodes et la présence d'un écoulement le plus turbulent possible à la traversée de celles-ci, provoque un entraînement de micro bulles.

Comme on l'a vu, un mode de réalisation schématique de module a été représenté, à titre d'exemple non limitatif, en référence à la figure 5. Les électrodes sont disposées parallèlement, en pile. Leur largeur par exemple de l'ordre de 5 cm, permet une bonne dispersion du fluide au niveau de la surface active des électrodes et évite les écoulements laminaires qui minimise l'effet de dispersion au contact de la surface des électrodes.

Le module est formé d'une petite enceinte de surface par exemple ovale, le débit de passage au travers des électrodes étant par exemple 20m3/h pour rendre le fluide efficace et le charger suffisamment en oxydant OH°.

Du fait de cette électrolyse le fluide devient hyperoxydant. On observe alors que les relations chimiques deviennent fugaces et violentes, le radical hydroxyle arrachant un proton et un électron (H+) à la première structure organique qu'il rencontre, et ce afin de reformer une molécule d'eau stable.

On comprend alors que ce phénomène s'accompagne d'un découpage de la structure carbonée produisant une structure radicalaire à la recherche d'un hydrogène à prélever. Il y a ainsi une chaîne de réactions d'oxydation de la matière organique, qui peut être exploitée.

L'hydrolyse produit en outre une très grande concentration de microbulles qui vont se révéler fonctionner comme des structures tensio-actives de la molécule organique.

Au passage d'une microbulle, on constate alors que la molécule s'accroche par son pôle hydrophobe et remonte vers la surface. Plus le bullage est dense, plus on constate que l'extraction est bonne et le processus d'écumage performant.

On a représenté en référence aux figures 7 à 11 les résultats d'essais effectués sur des « eaux blanches ». Il s'agit d'un effluent d'aspect laiteux, de pH proche de la neutralité (pH= 6,8), produit par la centrifugation, puis d'une flottation ayant permis le déshuilage. Il est alors à une température de l'ordre de 60°C.

Plus précisément les produits traités sont les matières organiques issues du traitement des graines oléagineuses après soustraction des matières lipidiques.

Ces résidus sont issus du raffinage des graines puis d'une phase de centrifugation utilisée pour soustraire le complément huileux.

L'effluent à traiter est ainsi constitué :
■ de protéines, 2 à 3% de la matière sèche.
■ de résidus huileux non récupérés par centrifugation dont des cires (acides gras à 30 carbones), 20 à 30% de la matière sèche.
■ et de glucides (amidons majoritairement), le reste de la matière sèche.

En d'autres termes, l'effluent est majoritairement constitué de structures carbonées à longues chaînes ou d'assemblages de ces structures moléculaires.

Il est sous forme émulsionnée d'une DCO de référence se situant entre 15.000 et 30.000 mg /l.

Associé à cette forte DCO, on peut en outre constater un rapport DCO/DB05 favorable à la biodégradation de l'effluent mais un rapport DCO/DB021 particulièrement défavorable expliquant les difficultés rencontrées par les solutions usuelles.

L'équilibre organique de la matière constitutive de l'effluent engendre une consommation biologique en boucle produisant et reproduisant une matière organique sans vraiment l'épurer.

Exemple : Il a ainsi été constaté, dans les modes opératoires des stations, la formation de molécules de dextrines et notamment de cyclodextrines (dextrines organisées en cycles de forme conique). Ces structures sont biorésistantes, très solubles et diffuses. En traitement classique, le phénomène de plastification de la matière organique ne fait que s'amplifier, le but étant pourtant de l'enrayer.

Ces phénomènes confèrent au produit un talon de non biodégrabilité avec une DCO semblant inextricable qui se situe aux alentours de 1000 mg /l (+ ou - 300 mg).

Avec le dispositif selon l'invention à quatre compartiments en eaux, les résultats exceptionnels correspondant aux tableaux I à V, (séries 1 à 5) ont pu être observés.

Le traitement industriel des effluents a été réalisé à un débit compris entre 1 et 2m3/h, un volume total d'enceinte de 5,5m3, et un débit de recirculation (dit tourne rond) de 60 m3/h.

Le système d'oxydation est un système par électrolyse du type décrit ci-avant qui est réalisé sur le tourne rond proprement dit.

Le fonctionnement du dispositif est complété par une action biologique à lit fixé de 100 litres.

En référence à la figure 7, il a été obtenu le Tableau I ci-après :

**TABLEAU I**

| Echantillon | Numéro | DCO mg/l | Abattement |
|---|---|---|---|
| Effluent brut | 1 | 18240 | |
| Traitement en batch de 5.5 m3 : 1h / flottation + oxydation | 2 | 1320 | 0,928 |
| Traitement en batch de 5.5 m3 : 2h / flottation + oxydation | 3 | 1280 | 0,930 |
| Traitement en batch de 5,5 m3 : 3h / flottation + oxydation | 4 | 1190 | 0,935 |
| Traitement en batch de 5,5 m3 : 4h / flottation + oxydation | 5 | 1180 | 0,935 |
| Traitement en batch de 5.5 m3 : 5h / flottation + oxyadtion | 6 | 1170 | 0,936 |
| + biologie 10 h | 7 | 528 | 0.971 |

On voit que, pour un traitement de 5 heures en batch, les résultats font apparaître un abattement de :
■ 16920 mg/l de DCO la 1^{ère} heure, ce qui représente un rendement de 93% d'abattement
■ 150 mg/l de DCO pendant les 4 heures suivantes.

Le traitement physicochimique atteint donc un plancher aux alentours de 1100 mg/l.

La phase biologique permet en revanche de reprendre l'abattement de DCO.

Dans un délai très court (au regard du faible volume du filtre biologique), l'abattement de DCO est de 645 mg/l (55%) soit 645 g de DCO pour l'ensemble du batch biologique. Ceci est plus performant que le ratio maximum théorique (415 g pour 10h).

Un deuxième exemple a été réalisé en référence à la figure 8 et a permis d'obtenir le Tableau II ci-après :

**TABLEAU II**

| Echantillon | Numéro | DCO mg/l | Abattement |
|---|---|---|---|
| Effluent brut | 1 | 27840 | |
| Traitement en continu à 1 m3/h pdt 1h | 2 | 1160 | 0,958 |
| Biologie en 10 h | 3 | 628 | 0,977 |
| Biologie en 10 h + passage oxydation | 4 | 420 | 0,985 |

Cette fois, avec la même installation, en fonctionnement en continu à 1 m3/h et en améliorant le mode opératoire de façon classique concernant le mode d'introduction et de mélange des réactifs (un coagulant spécifique dosé à 60 mg/l et un floculant spécifique dosé à 40 mg/l), on obtient un abattement de DCO (96%) encore meilleur passant de 27840 à 1160 mg/l.
Quelque soit la DCO d'entrée, la phase physicochimique atteint ici un plancher aux alentours de 1100 mg/l.

Malgré le mode continu (à 1 m3/h pour 5,5 m3 de volume d'enceinte), l'abattement en DCO est aussi efficace qu'en batch.
En 10 heures de filtre biologique, l'abattement a été de 45% soit 532 mg/l ou 532 g de DCO pour le batch biologique soit toujours plus performant que l'optimum théorique (415 g pour 10h).
Ce phénomène qui s'est réalisé alors que le biofilm consommateur de matière était très peu constitué, est la conséquence de l'oxydation réalisée au cours de la phase physicochimique.

En outre, si l'on prélève un échantillon de l'effluent en phase biologique et ayant subi un passage au travers des électrodes oxydantes on obtient un abattement certain de 740 mg/l (soit 64%) par rapport au produit avant entrée en bio. L'oxydation a permis d'obtenir un abattement de 208 mg/l de DCO, soit 208 g de DCO.

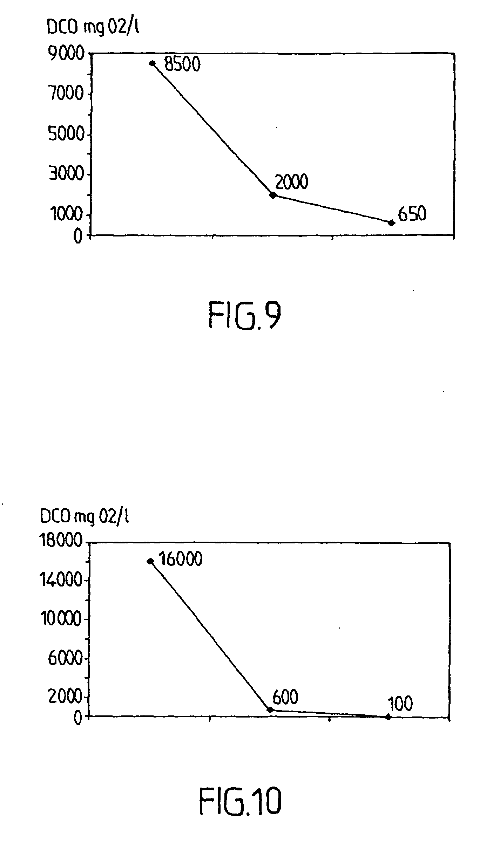

Les figures 9 et 10 font quant-à-elles référence aux tableaux IV et V ci-après.

**TABLEAU IV**

| Echantillon | Numéro | DCO mg/l | Abattement |
|---|---|---|---|
| Effluent brut emulsion huiles ateliers | 1 | 8500 | |
| Traitement physico chimique 1/2 heure sans oxydation | 2 | 2000 | 0,933 |
| Traitement physico chimique + 1/2 heure avec oxydation | 3 | 650 | 0,978 |

Il s'agit ici du traitement d'une émulsion d'huiles organiques et minérales, Emulsion très stable, stabilisée par l'apport de tensio actifs exogènes.

Les données sont les suivantes :
Dispositif : 1,3 m3
Débit de fonctionnement : 1 m3/h
Temps de séjour : 1 heure 20 minutes.
Pompage de recirculation production de bulles de 40 m3/h
Oxydation sur la recirculation de 40 m3/h par électrolyse de production de radicaux libres hydroxyles.
Effluent : émulsion de 8500 mg O2/1 de DCO, MES : 150 mg/l, Hydrocarbures totaux : 5 mg/l
Eau après traitement :
MES : 35 mg/l
DCO : 600 mg/l
Hydrocarbures totaux : <0.05 mg/l.

**TABLEAU V**

| Echantillon | Numéro | DCO mg/l | Abattement |
|---|---|---|---|
| Effluent brut eau hydrocarburée | 1 | 16000 | |
| Traitement physico chimique 1 h 20 min | 2 | 600 | 0,943 |
| lit fixé biologique 9 m3 | 3 | 100 | 0,990 |

Ici l'eau traitée est une Eau chargée en hydrocarbures.

Les paramètres mis en oeuvre sont quant-à-eux les suivants :
Dispositif : 5,5 m3
Débit de fonctionnement : 4 m3/h
Temps de séjour : 1 heure 20 minutés.
Pompage de recirculation production de bulles : 50 m3/h
Oxydation sur la recirculation de 50 m3/h par électrolyse de production de radicaux libres hydroxyles (OH°), de H202 et de 03.
Effluent :
   DCO : 16000 mg 02 /l
   Eau après traitement :
      DCO : 600 mg O2/l
      Eau après traitement complémentaire par lit fixé biologique de 9 m3 de volume avec débit de fonctionnement de 0,5 m3/h.
      DCO 100 mg/l

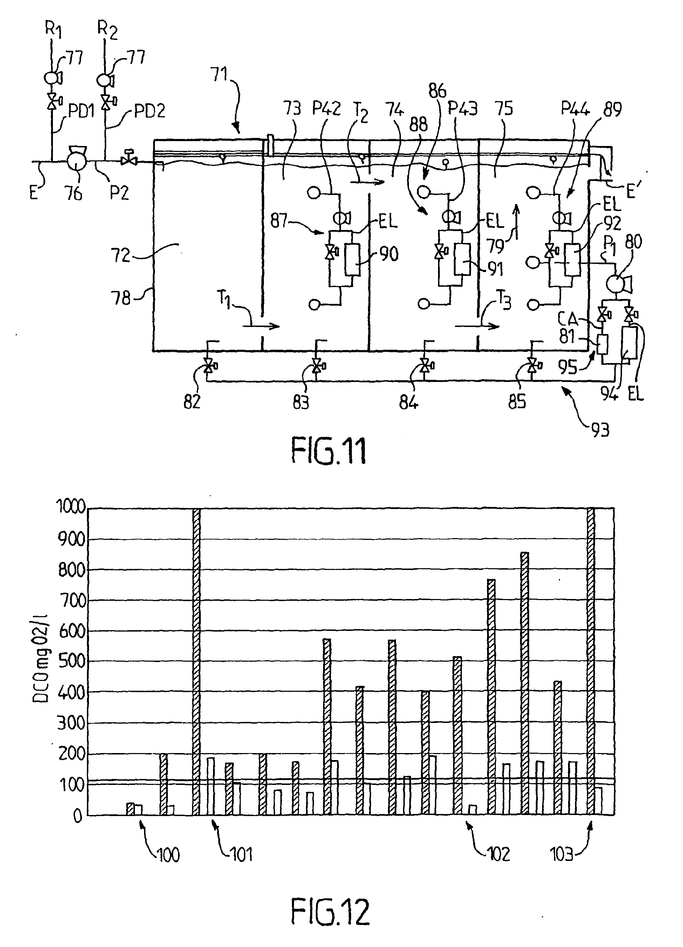

On va maintenant décrire en référence à la figure 11, un autre mode de réalisation d'un dispositif 71 à quatre compartiments 72, 73, 74, 75, ainsi que son fonctionnement selon l'invention.

Le dispositif 71 comprend une pompe 76 qui aspire l'effluent.

Il est ici prévu l'admission de réactifs R1 et R2 au dosage souhaité (pompes doseuses 77) aux débits PD1 et PD2 par introduction avant et après le corps de la pompe 76.

L'introduction se fait ensuite dans le réacteur 78 du dispositif par le compartiment 72 en partie haute avec une introduction en direction du bas du réacteur pour éviter un effet de réflexions sur les bords du compartiment.

Le passage entre les compartiments 72 et 73 s'effectue par le transfert T1 situé en partie basse de la cuve.

Au cours de sa descente dans le compartiment 72, l'effluent rencontre un flux ascensionnel 79 du fluide traité aspiré à un débit P1 (par exemple 100 m³/h) dans le dernier compartiment 75 par la pompe 80.

Ce mélange est amélioré par la création d'un vortex de façon connue en elle même, optimisant le temps de contact. Ce mélange a un intérêt physique puisque le flux ascensionnel a bénéficié de la production de petites bulles créées par cavitation par exemple basée sur la vitesse du fluide à travers un système venturi 81.

Ce mélange a un rôle chimique d'oxydation puisque l'eau du quatrième compartiment a un niveau d'oxydation très élevé par exemple de 300 à 900 mV.

Les actions d'oxydation et de séparation de phase solide/liquide et colloïde/liquide se perpétuent ensuite dans le deuxième compartiment, puis dans le troisième et le quatrième.

L'utilisateur règle les vannes de fond de compartiments 82, 83, 84 et 85 afin de produire un effet de vortex et de turbulence nécessaire au bon fonctionnement du procédé, de répartir les pertes de charge et de régler les débits respectifs en fonction de paramètres optimisés par l'homme du métier.

Pour avoir un temps de contact suffisant, il procède en effet grâce à des tests d'approximation successifs en jouant sur les points de réglage de son installation de façon à la portée de l'opérateur et/ou technicien génie chimiste du métier, et compte tenu des spécifications entrée/sortie des effluents à traiter.

Cette régulation doit en outre permettre que la partie haute de la cuve reste très calme, sans désordre sauf celui provoqué par la montée de la matière véhiculée par les bulles ascendantes, accrochant les têtes hydrophobes de l'eau.

Dans le mode avantageux décrit en référence à la figure 11, particulièrement efficace, il est de plus prévu des circuits hydrauliques externes supplémentaires (boucles d'oxydation) 87, 88 et 89 de bypass. Ceux-ci permettent un fort brassage supplémentaire sur chacun des compartiments 73, 74 et 75 à des forts débits P42, P43, P44 par exemple de 40m³/h avec réacteurs d'électrolyse et/ou dispositif d'oxydation supplémentaire (réacteurs 90, 91, 92).

En d'autres termes alors que le débit théorique de traversée des réacteurs d'électrolyse est par exemple de 10 m3/h, il est organisé une recirculation à un débit plus de trois fois supérieur au débit théorique du réacteur. L'exploitant joue alors avec la fermeture de l'électrovanne située sur une canalisation parallèle à celle du réacteur pour augmenter ledit débit.

Ce système permet en outre d'être le plus turbulent possible à la traversée du réacteur et donc au contact des électrodes afin de maximiser la probabilité de rencontre des oxydants. Il permet également de recirculer un plus grand nombre de fois l'ensemble de volume à traiter, ce qui augmente encore la probabilité d'oxydation de la matière.

Arrivée à la surface, les bulles éclatent et c'est la surface qui joue alors un rôle de captation de la matière organique.

Selon l'invention il est ici nécessaire que cette surface soit débarrassée efficacement de sa matière par raclage ou aspiration de la phase surnageante.

Cette matière dense mais crémeuse, est quasiment le seul résidu du traitement, ce qui est un avantage important de l'invention.

La vitesse de raclage ou le débit d'aspiration des crèmes doit être mise en oeuvre afin de soustraire la matière avec efficacité mais sans perturber le caractère statique de la lame d'eau.

L'effluent bénéficie d'une forte aspiration T2 dès le deuxième compartiment 73, cette aspiration s'effectuant sous une zone 86 de cumul de matières et de bulles de la partie haute du compartiment.

Encore une fois elle doit éviter de perturber le calme de la zone haute du compartiment située au dessus.

De retour dans le compartiment suivant 74 l'eau a alors pu bénéficié d'une très forte oxydation, cette oxydation a produit des bulles.

Cette eau est ensuite introduite à nouveau en partie basse T3 du compartiment 75 afin de la faire bénéficier à nouveau du bullage favorable à la séparation de phases. C'est dans ce compartiment que la phase de pollution dissoute est alors surtout précipitée par l'oxydation et notamment par l'électrolyse si l'électrolyse est la technique utilisée pour produire les oxydants.

Une fois précipitée cette matière est ici encore captée par les bulles dans leur course vers le haut du compartiment et est soustraite du milieu.

Au fur et à mesure de son cheminement vers le compartiment 75, l'eau a ainsi pu bénéficier d'une très forte oxydation réduisant son taux de matière polluante, craquant à froid les molécules.

On constate alors que des molécules qu'on n'arrivait pas à traiter jusqu'alors sont ramenées vers des molécules de CO2 ou vers des molécules plus petites qui par la suite vont enfin et plus facilement être consommables par les bactéries.

C'est la raison pour laquelle un tel procédé est non seulement efficace et utilisable seul, mais également en prétraitement avant une station d'épuration biologique plus classique.

L'eau perd ainsi progressivement sa charge polluante, organique, sa couleur, son odeur.

Les effluents sont ensuite aspirés par la pompe 80 pour être injectés dans la boucle d'oxydation 93 comprenant un dispositif 94 d'électrolyse (réacteur) et de cavitation 95 (débit d'air CA), en parallèles.

On a représenté ci-après un tableau des paramètres utilisés par l'homme du métier pour réguler le dispositif décrit ci-dessus afin d'obtenir les excellents résultats du type de ceux qui vont ensuite être présentés en référence aux figures 12 à 15.

**TABLEAU VI**

| **Fonctions** | | **Paramètres** |
|---|---|---|
| Hydrodynamique | 1 | Débit de traitement ***P2,** m3*/*h* |
| | | Débits de recirculation ***P1, P42, P43, P44*:** *m3*/*h* |
| | | Vortex, ouverture des vannes de *fonds* de *cuve, **82, 83, 84, 85*** |
| | | Position des boucles d'oxydation, ***93, 87, 88, 89*** |
| | | Répartition des flux du bypass général, ***82, 83, 84, 85*** |
| Cavitation, oxydation | 2 | débit d'air ***CA** m3*/*h* |
| | | répartition du flux dans les compartiments du réacteur (*ouverture des vannes en partie basse des 4 compartiments actifs) **82, 83, 84, 85*** |
| Oxydation radicalaire | 3 | Intensité aux bornes des réacteurs **90, 91, 92, 94 EL** *en A*/*cm2* |
| | | surface active **SA** *en m2 par réacteur EL* |
| | | Localisation des réacteurs EL *sur les boucles **93, 87, 88, 89*** |
| | | Débit des recirculations au travers des réacteurs, vitesse du fluide, **82, 83, 84, 84.** |
| Séparation de phases | 4 | Introduction de l'oxydation **compartiments 72 à 75** |
| | | Coagulation, **PD1,** *débit l*/*h* |
| | | Floculation, **PD2,** *débit l*/*h* |
| | | Ecrémage, **VR** vitesse de rotation du dispositif d'écrémage |

Pour l'ensemble du dispositif le temps de séjour est variable en fonction de l'effluent traité de 30 minutes à quelques heures, 3 ou 4 heures par exemple.

L'effluent arrive donc dans le dernier compartiment après avoir bénéficié d'un écoulement vertical dans chaque compartiment précédent et donc d'avoir eu d'un temps de séjour maximum et un temps de contact optimum.

Un exemple d'épuration est donné ci-après avec le dispositif décrit en référence à la figure 11 sur une eau chargée en matière organique (faible charge) et inorganique (Chlorures très variables).

Il s'agit d'un effluent très spécifique à grande variabilité :
- *Eaux de mer mélangées à des hydrocarbures bruts*
- *Grande variété de bruts*
- *DCO faible et variable de 30 à 3000 ppm*
- *DCO soluble majoritaire*
- *Chlorures (NaCl,MgCl,CaCl2...) variables de 3 (dilution) à 30 g*/*l*

Les résultats obtenus sont donnés sur la figure 12, la zone hachurée donnant l'effluent avant traitement, et celle en clair après traitement.

On constate ici que les conditions initiales pour l'effluent 100 est très différent de l'effluent 101, ou encore 102 ou 103.

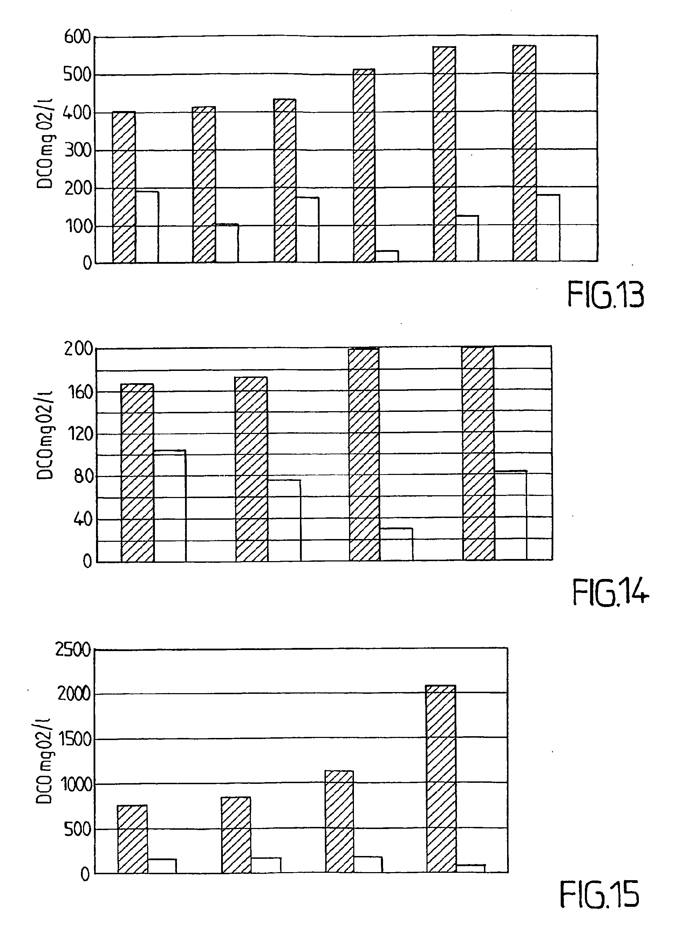

Trois autres exemples de résultats sont également donnés en référence aux tableaux ci-après VII, VIII et IX et aux figures 13 à 15, montrant que même avec une grande variabilité dans les DCO initiales, l'invention permet d'obtenir des résultats où la DCO finale est en dessous d'une valeur déterminée et ce avec la même installation.

Le tableau VII correspond à la figure 13 (DCO de départ moyen).

Le tableau VIII correspond à la figure 14 (DCO de départ faible).

Le tableau IX correspond à la figure 15 (DCO de départ plus fort).

**TABLEAU VII**

| Paramètres | 1 | 2 | 3 | 4 | 5 | 6 |
|---|---|---|---|---|---|---|
| Fonctionnement | Batch | Batch | Batch | Batch | Batch | Batch |
| Temps de séjour (heures) | 7 | 8 | 7 | 9 | 8 | 8 |
| Surface d'électrodes (m²) | 4 | 4 | 4 | 4 | 4 | 4 |
| Intensité/réac teur (A) | 150 | 200 | 125 | 250 | 250 | 150 |
| Débit P1 (m3/h) | 20 | 20 | 30 | 30 | 30 | 20 |
| Débit P4 (m3/h) | 10 | 10 | 10 | 10 | 10 | 10 |
| Vitesse d'écrémage (tours/mon) | 1 | 1 | 1,5 | 1,5 | 1 | 1 |
| Injection coagulant ppm/timing | 15ppm démarrage 5ppm en milieu de cycle | 10ppm démarrag e 10ppm en milieu de cycle | 20ppm démarrage 5ppm en milieu de cycle | 20ppm démarrage 5ppm en milieu de cycle | 20ppm démarrage 10ppm en milieu de cycle | 20ppm démarrage 10ppm en milieu de cycle |
| Injection Floculant ppm/timing | 2ppm démarrage 2ppm milieu de cycle | 5ppm démarrag e 3ppm milieu de cycle | 2ppm démarrage 1ppm milieu de cycle | 3ppm démarrage 1ppm milieu de cycle | 1ppm démarrage 1ppm milieu de cycle | 1ppm démarrage 1ppm milieu de cycle |
| Cavitation | 65% | 50% | 50% | 50% | 50% | 65% |
| Position d'oxydation général (G) particulier (Cᵢ) | G+C4 | G+C4 | G+C4 | G+C4 | G+C4 | G+C4 |
| | ou bypass général et bypass sur 4ème compartiment | bypass général et bypass sur 4ème comparti ment | bypass général et bypass sur 4ème compartiment | bypass général et bypass sur 4ème compartiment | bypass général et bypass sur 4ème compartiment | bypass général et bypass sur 4ème compartiment |

**TABLEAU VIII**

| Paramètres | 1 | 2 | 3 | 4 |
|---|---|---|---|---|
| Fonctionnement | Batch | Batch | Batch | Batch |
| Temps de séjour (heures) | 7 | 8 | 8 | 9 |
| Surface d'électrodes (m²) | 4 | 4 | 4 | 4 |
| Intensité/réacteur (A) | 150 | 150 | 200 | 150 |
| Débit P1 (m3/h) | 205 | 20 | 30 | 30 |
| Débit P4 (m3/h) | 10 | 10 | 10 | 10 |
| Vitesse d'écrémage (tours/mon) | 1 | 1 | 1,5 | 1,5 |
| Injection coagulant ppm/timing | 20ppm démarrage 10ppm en milieu de cycle | 10ppm démarrage 10ppm en milieu de cycle | 20ppm démarrage 10ppm en milieu de cycle | 20ppm démarrage 20ppm en milieu de cycle |
| Injection Floculant ppm/timing | 2ppm démarrage 2ppm milieu de cycle | 5ppm démarrage 3ppm milieu de cycle | 2ppm démarrage 1ppm milieu de cycle | 3ppm démarrage 1ppm milieu de cycle |
| Cavitation | 50% | 50% | 50% | 50% |
| Position d'oxydation sur bypass général ou particulier i | G+C4 | G+C4 | G+C4 | G+C4 |
| | bypass général et bypass sur 4ème compartiment | bypass général et bypass sur 4ème compartiment | bypass général et bypass sur 4ème compartiment | bypass général et bypass sur 4ème compartiment |

**TABLEAU IX**

| Paramètres | 1 | 2 | 3 | 4 |
|---|---|---|---|---|
| Fonctionnement | Batch | Batch | Batch | Batch |
| Temps de séjour (heures) | 7:30 | 8 | 8h30 | 9 |
| Surface d'électrodes (m²) | 4 | 4 | 4 | 4 |
| Intensité/réacteur (A) | 50 | 75 | 200 | 100 |
| Débit P1 (m3/h) | 35 | 20 | 30 | 40 |
| Débit P4 (m3/h) | 10 | 10 | 10 | 10 |
| Vitesse d'écrémage (tours/mon) | 1 | 2 | 1 | 2 |
| Injection coagulant ppm/timing | 20ppm démarrage 10ppm en milieu de cycle | 10ppm démarrage 10ppm en milieu de cycle | 20ppm démarrage 10ppm en milieu de cycle | 20ppm démarrage 10ppm en milieu de cycle |
| Injection Floculant ppm/timing | 2ppm démarrage 1ppm milieu de cycle | 2ppm démarrage 2ppm milieu de cycle | 2ppm démarrage 1ppm milieu de cycle | 3ppm démarrage 2ppm milieu de cycle |
| Cavitation | 50% | 50% | 50% | 100% |
| Position d'oxydation sur bypass général ou particulier i | G+C4 | G+C4 | G+C4 | G+C4 |
| | bypass général et bypass sur 4ème compartiment | bypass général et bypass sur 4ème compartiment | bypass général et bypass sur 4ème compartiment | bypass général et bypass sur 4ème compartiment |

Il va de soi que l'homme du métier, en fonction des effluents à traiter, adaptera la taille des différentes bulles au départ et le(s) débit(s) d'oxydation de façon à obtenir la DCO recherchée, et ce par amélioration successive, s'il y a lieu, au moment des préréglages de l'installation lors du démarrage avant son exploitation industrielle, de façon connue.

Comme il va de soi et comme il résulte également de ce qui précède, la présente invention n'est pas limitée aux modes de réalisation plus particulièrement décrits. Elle en embrasse au contraire toutes les variantes et notamment celles où, par exemple, l'enceinte n'est pas cylindrique et où encore on évacue les boues par aspiration et non par raclage.

## Revendications

1. Procédé d'épuration d'effluents liquides chargés de substances organiques et/ou minérales, dissoutes ou non, pour les amener en dessous d'un seuil de DCO déterminé, dans lequel on sépare l'eau des substances en effectuant dans une même enceinte (3) verticale comportant au moins deux compartiments, un bullage vertical dans les effluents introduits à un débit d, et simultanément dans la même enceinte une oxydation chimique hydraulique ou gazeuse desdits effluents, **caractérisé en ce que** l'enceinte (3) étant à surface libre et comprenant au moins trois compartiments (4, 5, 6, 7) communiquant entre eux pour permettre une circulation entre compartiments successivement du haut vers le bas et du bas vers le haut et ainsi de suite, on introduit les effluents d'un coté et on les soutire d'un autre côté en partie haute de l'enceinte audit débit d, on fait circuler, par le biais d'un circuit hydraulique externe (26), les effluents au travers des compartiments entre leur partie basse et un niveau moyen à un débit global D au moins trois fois supérieur au débit d, et on évacue en continu la phase surnageante, le débit d'oxydation chimique ainsi que le débit et la taille des bulles étant agencés pour obtenir progressivement une séparation de phases solide/liquide et/ou liquide/liquide en surface de l'enceinte permettant l'obtention d'une DCO en dessous du seuil déterminé.

2. Procédé selon la revendication 1, **caractérisé en ce que** l'oxydant chimique est, seul ou en combinaison, choisi parmi les oxydants H2O2, 03, O° ou OH°.

3. Procédé selon la revendication 2, **caractérisée en ce que** l'oxydant chimique est injecté dans un circuit en by pass avec un des compartiments.

4. Procédé selon l'une quelconque des revendications précédentes, c'est-à-dire ce que on évacue en continu la phase surnageante par raclage en partie supérieure des boues de flottage dans un compartiment déversoir (8).

5. Procédé selon l'une quelconque des revendications précédentes, **caractérisé en ce que** l'oxydation chimique est essentiellement réalisée dans le dernier compartiment (7) de circulation des effluents de l'enceinte.

6. Procédé selon l'une quelconque des revendications précédentes, **caractérisé en ce que** l'oxydation chimique comporte un bullage de microbulles obtenu par électrolyse, dit nanobullage.

7. Procédé selon la revendication 6, **caractérisé en ce que** le nanobullage est obtenu par circulation d'une partie des effluents recyclés sur des électrodes plates parallèles qui produisent des substances radicalaires à la surface desdites électrodes.

8. Procédé selon l'une quelconques des revendications 6 et 7, **caractérisé en ce que** le débit du nanobullage est compris entre 2 d et 15 d.

9. Procédé selon l'une quelconque des revendications précédentes, **caractérisé en ce que** le débit D de circulation des effluents au travers des compartiments est supérieur à dix fois le débit d.

10. Procédé selon l'une quelconque des revendications précédentes, **caractérisé en ce que** le bullage est effectué avec de l'air, la dimension moyenne de bulles à leur émission étant comprise entre 0,5 mm et 5 mm.

11. Procédé selon l'une quelconque des revendications précédentes, **caractérisé en ce que** le bullage vertical est obtenu par cavitation dans le circuit de circulation des effluents.

12. Procédé selon l'une quelconque des revendications précédentes, **caractérisé en ce que** le débit D est réinjecté en partie basse d'un ou plusieurs des compartiments.

13. Procédé selon l'une quelconque des revendications précédentes, **caractérisé en ce que** le régime hydraulique vertical dans l'enceinte (3) est agencé pour que la partie basse soit en régime fortement turbulent (Re >>3000 m² s-1)et la partie haute proche de la surface libre soit en régime laminaire (Re < 2000 m² s-1) .

14. Procédé selon l'une quelconque des revendications précédentes, **caractérisé en ce que** on réalise un brassage complémentaire à fort débit dans un ou plusieurs des compartiments par recirculation via un circuit bypass attaché au compartiment concerné.

15. Procédé selon la revendication 14, **caractérisé en ce que** on réalise de plus une oxydation complémentaire dans le circuit bypass.

16. Procédé selon l'une quelconque des revendications précédentes, **caractérisé en ce qu'**il comporte de plus une filtration biologique.

17. Dispositif (1) épurateur d'effluents liquides chargés de substances organiques et/ou minérales, dissoutes ou non, pour les amener en dessous d'un seuil de DCO déterminé, comprenant une enceinte verticale (3) comportant au moins deux compartiments (4, 5, 6, 7) verticaux adjacents communiquant entre eux, des moyens d'alimentation en air de bullage vertical en partie basse des compartiments, des moyens d'introduction (29) des effluents d'un coté et de soutirage (34) d'un autre coté en partie haute de l'enceinte à un débit d, et des moyens (37) d'alimentation en fluide d'oxydation chimique hydraulique ou gazeux desdits effluents, **caractérisé en ce que** l'enceinte comportent au moins trois compartiments communiquant entre eux par une ou plusieurs ouvertures (22, 23, 24) ménagées en paroi d'une part à leur partie basse et d'autre part à un niveau moyen, pour permettre une circulation entre compartiments successivement du haut vers le bas et du bas vers le haut et ainsi de suite, des moyens (20) de mise en circulation par circuit hydraulique externe (26) des effluents entre les ouvertures en partie basse des parois et celles à un niveau moyen à un débit D au moins trois fois supérieur au débit d, des moyens d'évacuation en continu de la phase surnageante, et des moyens (19) de réglage permettant d'ajuster le débit d'oxydation chimique ainsi que le débit et la taille des bulles pour obtenir une séparation de phase solide/liquide et/ou liquide/liquide des effluents en surface de l'enceinte permettant l'obtention d'une DCO en dessous du seuil déterminé.

18. Dispositif selon la revendication 17, **caractérisé en ce que** il comporte cinq compartiments (4, 5, 6, 7, 8) dont quatre (4, 5, 6, 7) de circulation des effluents et un (8) d'évacuation des boues de flottage.

19. Dispositif selon l'une quelconque des revendications 17 et 18, **caractérisé en ce que** les compartiments ont une hauteur utile comprise entre 2 m et 6 m.

20. Dispositif selon l'une quelconque des revendications 17 à 19, **caractérisé en ce que** le rapport entre la hauteur utile H et la section S de chaque compartiment est compris entre 4 et 10.

21. Dispositif selon l'une quelconque des revendications 17 à 20, **caractérisé en ce que** l'oxydation chimique est effectuée par production de radicaux libres hydroxyles OH° à partir de la molécule d'eau H2O par une technique d'électrolyse

22. Dispositif selon l'une quelconque des revendications 17 à 21, **caractérisé en ce que** les bulles d'air pour bullage vertical sont réalisées dans le circuit (20) de mise en circulation des effluents par des moyens de cavitation.

23. Dispositif selon l'une quelconque des revendications 17 à 22, **caractérisé en ce** un moins un compartiment comprend un circuit bypass qui lui est attaché de recirculation à fort débit.

24. Dispositif selon la revendication 23, **caractérisé en ce que** le circuit bypass comporte des moyens d'oxydation complémentaire par électrolyse.

25. Dispositif selon l'une quelconque des revendications 17 à 24, **caractérisé en cequ'**il comporte de plus des moyens de traitement par filtration biologique.

## Claims

1. Method for purifying liquid effluents charged with dissolved or undissolved organic and/or mineral substances, in order to bring them below a given COD threshold, in which the water is separated from the substances by carrying out, in one and the same vertical chamber (3) comprising at least two compartments, vertical bubbling in the effluents introduced at a flow rate d, and simultaneously in the same chamber hydraulic or gaseous chemical oxidation of said effluents, **characterised in that** the chamber (3) has a free surface and comprises at least three compartments (4, 5, 6, 7) which communicate with one another in order to allow circulation between compartments successively from the top to the bottom and from the bottom to the top and so on, the effluents are introduced on one side and are withdrawn from another side in the upper part of the chamber at said flow rate d, the effluents are circulated by means of an external hydraulic circuit (26) through the compartments between the lower part thereof and a middle level at an overall flow rate D at least three times higher than the flow rate d, and the supernatant phase is continuously discharged, the rate of chemical oxidation and also the flow rate and the size of the bubbles being selected in order to gradually obtain a separation of solid/liquid and/or liquid/liquid phases at the surface of the chamber, making it possible to obtain a COD below the given threshold.

2. Method according to claim 1, **characterised in that** the chemical oxidant is, alone or in combination, chosen from the oxidants H2O2, 03, O° or OH°.

3. Method according to claim 2, **characterised in that** the chemical oxidant is injected into a circuit bypassing one of the compartments.

4. Method according to any one of the preceding claims, **characterised in that** the supernatant phase is continuously discharged by scraping the floating sludge in the upper part into an overflow compartment (8).

5. Method according to any one of the preceding claims, **characterised in that** the chemical oxidation is mainly carried out in the last compartment (7) for circulation of the effluents of the chamber.

6. Method according to any one of the preceding claims, **characterised in that** the chemical oxidation comprises bubbling of microbubbles obtained by electrolysis, known as nano-bubbling.

7. Method according to claim 6, **characterised in that** the nano-bubbling is obtained by circulating a portion of the recycled effluents to parallel flat electrodes which produce radical substances at the surface of said electrodes.

8. Method according to either claim 6 or claim 7, **characterised in that** the nano-bubbling flow rate is between 2 d and 15 d.

9. Method according to any one of the preceding claims, **characterised in that** the flow rate D for circulating effluents through the compartments is greater than 10 times the flow rate d.

10. Method according to any one of the preceding claims, **characterised in that** the bubbling is carried out with air, the average size of the bubbles when they are emitted being between 0.5 mm and 5 mm.

11. Method according to any one of the preceding claims, **characterised in that** the vertical bubbling is obtained by cavitation in the effluent circulation circuit.

12. Method according to any one of the preceding claims, **characterised in that** the flow D is reinjected in the lower part of one or more of the compartments.

13. Method according to any one of the preceding claims, **characterised in that** the vertical hydraulic regime in the chamber (3) is selected so that the lower part is in a highly turbulent regime (Re >>3000 m² s-1) and the upper part near the free surface is in laminar regime (Re < 2000 m² s-1).

14. Method according to any one of the preceding claims, **characterised in that** further agitation is carried out at a high flow rate in one or more of the compartments by recirculation via a bypass circuit connected to the compartment in question.

15. Method according to claim 14, **characterised in that** further oxidation is also carried out in the bypass circuit.

16. Method according to any one of the preceding claims, **characterised in that** it also comprises biological filtration.

17. Purifying device (1) for liquid effluents charged with dissolved or undissolved organic and/or mineral substances, in order to bring them below a given COD threshold, comprising a vertical chamber (3) comprising at least two adjacent vertical compartments (4, 5, 6, 7) which communicate with one another, means for supplying air for vertical bubbling in the lower part of the compartments, means (29) for introducing effluents on one side and means (34) for withdrawing them from another side in the upper part of the chamber at a flow rate d, and means (37) for supplying said effluents with fluid for hydraulic or gaseous chemical oxidation, **characterised in that** the chamber comprises at least three compartments which communicate with one another via one or more openings (22, 23, 24) made in a wall at the lower part thereof on the one hand and at a middle level on the other hand, in order to allow circulation between compartments successively from the top to the bottom and from the bottom to the top and so on, means (20) for circulating the effluents between the openings in the lower part of the walls and those at a middle level at a flow rate D at least three times greater than the flow rate d via an external hydraulic circuit (26), means for continuously discharging the supernatant phase, and control means (19) which make it possible to adjust the rate of chemical oxidation and also the flow rate and the size of the bubbles in order to obtain a separation of solid/liquid and/or liquid/liquid phase of the effluents at the surface of the chamber, making it possible to obtain a COD below the given threshold.

18. Device according to claim 17, **characterised in that** it has five compartments (4, 5, 6, 7, 8) including four (4, 5, 6, 7) for circulation of the effluents and one (8) for discharging the floating sludge.

19. Device according to either claim 17 or claim 18, **characterised in that** the compartments have a working height of between 2 m and 6 m.

20. Device according to any one of claims 17 to 19, **characterised in that** the ratio of the working height H to the section S of each compartment is between 4 and 10.

21. Device according to any one of claims 17 to 20, **characterised in that** the chemical oxidation is carried out by producing hydroxyl free radicals OH° from the water molecule H2O via an electrolysis technique.

22. Device according to any one of claims 17 to 21, **characterised in that** the air bubbles for vertical bubbling are produced in the circuit (20) for circulating effluents via cavitation means.

23. Device according to any one of claims 17 to 22, **characterised in that** at least one compartment comprises a bypass circuit which is connected to it for high flow rate recirculation.

24. Device according to claim 23, **characterised in that** the bypass circuit comprises means for further oxidation via electrolysis.

25. Device according to any one of claims 17 to 24, **characterised in that** it also comprises means for treatment by biological filtration.

## Patentansprüche

1. Verfahren zur Reinigung von flüssigen Abflüssen, die mit organischen und/oder mineralischen, aufgelösten oder nicht aufgelösten Stoffen belastet sind, um sie unter einen bestimmten CSB-Schwellenwert zu senken, bei dem das Wasser von den Stoffen getrennt wird, indem in ein und demselben vertikalen Behältnis (3) mit mindestens zwei Kammern eine vertikale Blasenbildung in den mit einem Durchfluss d eingebrachten Abflüssen und in demselben Behältnis gleichzeitig eine chemische Oxidation der Abflüsse durch ein hydraulisches oder ein gasförmiges Mittel erfolgen,
**dadurch gekennzeichnet,**
**dass** bei einem Behältnis (3) mit freier Oberfläche und mit mindestens drei Kammern (4, 5, 6, 7), die miteinander verbunden sind, um eine Strömung zwischen den Kammern sukzessive von oben nach unten und von unten nach oben und so weiter zu ermöglichen, die Abflüsse auf einer Seite eingebracht werden und auf einer anderen Seite in dem oberen Teil des Behältnisses mit dem Durchfluss d abgezogen werden, die Abflüsse über einen externen hydraulischen Kreislauf (26) durch die Kammern zwischen deren unterem Teil und einer mittleren Ebene mit einem Gesamtdurchfluss D geführt werden, welcher mindestens drei Mal größer ist als der Durchfluss d, und die obere Phase kontinuierlich abgeschöpft wird, wobei die Rate der chemischen Oxidation sowie der Durchsatz und die Größe der Blasen ausgestattet sind, um schrittweise eine Trennung der Fest/Flüssig- und/oder der Flüssig/Flüssig-Phasen an der Oberfläche des Behältnisses zu erreichen, wodurch das Erzielen eines unter dem bestimmten Schwellenwert liegenden CSB ermöglicht wird.

2. Verfahren nach Anspruch 1,
**dadurch gekennzeichnet,**
**dass** das chemische Oxidationsmittel allein oder kombiniert aus der Gruppe der Oxidationsmittel H2O2, 03, O° oder OH° gewählt ist.

3. Verfahren nach Anspruch 2,
**dadurch gekennzeichnet,**
**dass** das chemische Oxidationsmittel in einen Kreislauf gespeist wird, der einen Bypass zu einer der Kammern bildet.

4. Verfahren nach einem der vorhergehenden Ansprüche,
**dadurch gekennzeichnet,**
**dass** die obere Phase kontinuierlich abgeschöpft wird, indem in dem oberen Teil die Schwimmschlämme in eine Überlaufkammer (8) abgeschabt werden.

5. Verfahren nach einem der vorhergehenden Ansprüche,
**dadurch gekennzeichnet,**
**dass** die chemische Oxidation im Wesentlichen in der letzten Kammer (7), die in dem Behältnis von den Abflüssen durchströmt wird, erfolgt.

6. Verfahren nach einem der vorhergehenden Ansprüche,
**dadurch gekennzeichnet,**
**dass** die chemische Oxidation eine durch Elektrolyse erzielte Mikroblasenbildung bzw. so genannte Nanoblasenbildung umfasst.

7. Verfahren nach Anspruch 6,
**dadurch gekennzeichnet,**
**dass** die Nanoblasenbildung **dadurch** erzielt wird,
**dass** ein Teil der recycelten Abflüsse an flachen parallelen Elektroden strömt, die an der Oberfläche der Elektroden radikalartige Stoffe erzeugen.

8. Verfahren nach einem der Ansprüche 6 und 7,
**dadurch gekennzeichnet,**
**dass** die Nanoblasenbildungsrate zwischen 2 d und 15 d liegt.

9. Verfahren nach einem der vorhergehenden Ansprüche,
**dadurch gekennzeichnet,**
**dass** der Durchfluss D der Strömung der Abflüsse durch die Kammern das Zehnfache des Durchflusses d übersteigt.

10. Verfahren nach einem der vorhergehenden Ansprüche,
**dadurch gekennzeichnet,**
**dass** die Blasenbildung durch Luft erfolgt, wobei die durchschnittliche Abmessung der Blasen bei deren Ausstoß zwischen 0,5 mm und 5 mm liegt.

11. Verfahren nach einem der vorhergehenden Ansprüche,
**dadurch gekennzeichnet,**
**dass** die vertikale Blasenbildung durch Hohlsog in dem Strömungskreislauf der Abflüsse erzielt wird.

12. Verfahren nach einem der vorhergehenden Ansprüche,
**dadurch gekennzeichnet,**
**dass** der Durchfluss D in den unteren Teil einer oder mehrerer der Kammern wieder eingeleitet wird.

13. Verfahren nach einem der vorhergehenden Ansprüche,
**dadurch gekennzeichnet,**
**dass** die vertikale hydraulische Strömung in dem Behältnis (3) derart beschaffen ist, dass in dem unteren Teil eine stark turbulente Strömung (Re >> 3000 m² s-1) und in dem oberen, nahe der freien Oberfläche befindlichen Teil eine laminare Strömung herrscht (Re < 2000 m² s-1).

14. Verfahren nach einem der vorhergehenden Ansprüche,
**dadurch gekennzeichnet,**
**dass** eine ergänzende Umwälzung mit einem hohen Durchfluss in einer oder mehreren der Kammern durch Rezirkulation über einen mit der betreffenden Kammer verbundenen Bypass-Kreislauf erfolgt.

15. Verfahren nach Anspruch 14,
**dadurch gekennzeichnet,**
**dass** zusätzlich eine ergänzende Oxidation in dem Bypass-Kreislauf erfolgt.

16. Verfahren nach einem der vorhergehenden Ansprüche,
**dadurch gekennzeichnet**
**dass** es ferner eine biologische Filtration umfasst.

17. Vorrichtung (1) zur Reinigung von flüssigen Abflüssen, die mit organischen und/oder mineralischen, aufgelösten oder nicht aufgelösten Stoffen belastet sind, um sie unter einen bestimmten CSB-Schwellenwert zu senken, mit einem vertikalen Behältnis (3) mit mindestens zwei aneinander grenzenden, miteinander verbundenen vertikalen Kammern (4, 5, 6, 7), Mitteln für die Beaufschlagung des unteren Teils der Kammern mit Luft für eine vertikale Blasenbildung, Mitteln für die Einleitung (29) der Abflüsse auf einer Seite und für das Abziehen (34) auf einer anderen Seite in dem oberen Teil des Behältnisses mit einem Durchfluss d, und Mitteln (37) für die Beaufschlagung mit einem hydraulischen oder gasförmigen Fluid zur chemischen Oxidation der Abflüsse,
**dadurch gekennzeichnet,**
**dass** das Behältnis mindestens drei Kammern, die durch eine oder mehrere Öffnungen (22, 23, 24) miteinander verbunden sind, welche in der Wandung einerseits in deren unterem Teil und andererseits auf mittlerer Ebene ausgebildet sind, um eine Strömung zwischen den Kammern sukzessive von oben nach unten und von unten nach oben usw. zu ermöglichen, Mittel (20), um die Abflüsse zwischen den Öffnungen in dem unteren Teil der Wandungen und die Abflüsse auf einer mittleren Ebene über einen externen hydraulischen Kreislauf (26) mit einem Durchfluss D, der mindestens drei Mal größer ist als der Durchfluss d, in Strömung zu bringen, Mittel für das kontinuierliche Abschöpfen der oberen Phase und Regelungsmittel (19) für die Einstellung der Rate der chemischen Oxidation sowie des Durchsatzes und der Größe der Blasen aufweist, um
eine Trennung der Fest/Flüssig- und/oder der Flüssig/Flüssig-Phasen der Abflüsse an der Oberfläche des Behältnisses zu erreichen, wodurch das Erzielen eines unter dem bestimmten Schwellenwert liegenden CSB ermöglicht wird.

18. Vorrichtung nach Anspruch 17,
**dadurch gekennzeichnet,**
**dass** sie fünf Kammern (4, 5, 6, 7, 8) aufweist, von denen vier (4, 5, 6, 7) Kammern für die Strömung der Abflüsse und eine (8) eine Kammer für das Abschöpfen der Schwimmschlämme sind.

19. Vorrichtung nach einem der Ansprüche 17 und 18,
**dadurch gekennzeichnet,**
**dass** die Kammern eine Nutzhöhe aufweisen, die zwischen 2 m und 6 m liegt.

20. Vorrichtung nach einem der Ansprüche 17 bis 19,
**dadurch gekennzeichnet,**
**dass** das Verhältnis zwischen Nutzhöhe H und Querschnitt S jeder Kammer zwischen 4 und 10 liegt.

21. Vorrichtung nach einem der Ansprüche 17 bis 20,
**dadurch gekennzeichnet,**
**dass** die chemische Oxidation durch Erzeugung von freien Hydroxylradikalen OH° aus dem Wassermolekül H2O mit einer Elektrolysetechnik erfolgt.

22. Vorrichtung nach einem der Ansprüche 17 bis 21,
**dadurch gekennzeichnet,**
**dass** die Luftblasen für die vertikale Blasenbildung durch Hohlsogmittel in dem Kreislauf (20) für die Inströmungbringung der Abflüsse erzeugt werden.

23. Vorrichtung nach einem der Ansprüche 17 bis 22,
**dadurch gekennzeichnet,**
**dass** mindestens eine Kammer einen mit ihr verbundenen Bypass-Kreislauf für eine Rezirkulation mit einem hohen Durchfluss umfasst.

24. Vorrichtung nach Anspruch 23,
**dadurch gekennzeichnet,**
**dass** der Bypass-Kreislauf Mittel für eine ergänzende Oxidation durch Elektrolyse aufweist.

25. Vorrichtung nach einem der Ansprüche 17 bis 24,
**dadurch gekennzeichnet,**
**dass** sie ferner Mittel für eine Behandlung durch biologische Filtration aufweist.
